# EUROPÄISCHE PATENTSCHRIFT

(11) **EP 1 617 986 B1**
(45) Veröffentlichungstag und Bekanntmachung des Hinweises auf die Patenterteilung: **25.07.2007**
(21) Anmeldenummer: 04727174.7
(22) Anmeldetag: 14.04.2004
(51) Int. Cl.: B29C 47/90

(54) **VORRICHTUNG ZUM KALIBRIEREN EINES EXTRUDIERTEN KUNSTSTOFFPROFILS**
DEVICE FOR CALIBRATING AN EXTRUDED PLASTIC PROFILE
SYSTEME POUR CALIBRER UN PROFILE EN PLASTIQUE EXTRUDE

(30) Priorität: 15.04.2003 AT 5762003
(43) Veröffentlichungstag der Anmeldung: 25.01.2006
(73) Patentinhaber: Gruber & Co Group GmbH, 4643 Pettenbach (AT)
(72) Erfinder: KRUMBÖCK, Erwin Dr., 4052 Ansfelden (AT)
(74) Vertreter: Hübscher, Helmut
(86) Internationale Anmeldenummer: PCT/AT2004/000129
(87) Internationale Veröffentlichungsnummer: WO 2004/091890

(56) Entgegenhaltungen:
- DE-B- 1 201 038
- US-A- 4 288 905
- US-A- 5 316 459
- US-B1- 6 200 119
- US-B1- 6 394 782

## Beschreibung

### Technisches Gebiet

Die Erfindung bezieht sich auf eine Vorrichtung zum Kalibrieren eines extrudierten Kunststoffprofils mit einer Kalibriereinrichtung für den aus einer formgebenden Profildüse austretenden Profilstrang, wobei die Kalibriereinrichtung einen den Profilstrang umschließenden Formkörper mit am Profilstrang anliegenden Kalibrierflächen und in den Kalibrierflächen quer zur Durchlaufrichtung des Profilstranges verlaufende, an eine Unterdruckquelle anschließbare Vakuumschlitze aufweist.

### Stand der Technik

Beim Extrudieren eines Kunststoffprofils wird der aus einer formgebenden Profildüse austretende, heiße Profilstrang kalibriert und gekühlt, und zwar zunächst trocken in einer Kalibriervorrichtung, bevor der Profilstrang zum weiteren Abkühlen durch einen mit einer Kühlflüssigkeit, im allgemeinen Wasser, gefüllten Kühltank geführt wird. Diese Kalibriervorrichtung weist eine Kalibriereinrichtung mit einem Formkörper auf, der mit an die Querschnittsform des Kunststoffprofils angepaßten Kalibrierflächen versehen ist, wobei in den Katibrierflächen quer zur Durchlaufrichtung des Profilstranges verlaufende, an eine Unterdruckquelle angeschlossene Vakuumschlitze für ein Anliegen des Kunststoffprofils an den Kalibrierflächen des Formkörpers sorgen. Zur einfachen Herstellung solcher Kalibriereinrichtungen ist es bekannt (DE 28 09 386 A1), den Formkörper aus einzelnen in Durchlaufrichtung des Profilstranges verlaufenden Teilen aufzubauen, die miteinander verschraubt werden.

Damit der heiß aus der Profildüse austretende Profilstrang entsprechend abgekühlt werden kann, sind in der Kalibriereinrichtung Kühlkanäle gebohrt, durch die ein Kühlmittel, vorzugsweise Wasser, gepumpt wird, siehe zum Beispiel US-B1-6,200,119 und US-A-5,316,459. Da die Kühlkanäle zur besseren Kühlung des Profilstranges möglichst nahe der Kalibrierflächen vorgesehen werden und in Durchlaufrichtung des Profilstranges verlaufen, ist der für die Anordnung der Vakuumschlitze vorhandene Platz beschränkt, so daß die Vakuumschlitze eine nur vergleichsweise geringe Tiefe aufweisen. Aufgrund dieser geringen Tiefe und der funktionsbedingten Beschränkung der Öffnungsweite müssen die Vakuumschlitze an mehreren Stellen mit einem hohen Herstellungsaufwand an Unterdruckkanäle angeschlossen werden, um im Bereich der Vakuumschlitze den für die Ansaugung des Profilstranges an die Kalibrierflächen notwendigen Unterdruck aufbauen zu können.

Vor dem Abkühlen des aus der Profildüse austretenden Profilstranges ist mit Ausscheidungen aus dem Kunststoff an der Strangoberfläche zu rechnen, was insbesondere in einem Einlaufabschnitt der Kalibriereinrichtung zu Ablagerungen vor allem im Bereich der Vakuumschlitze führt. Diese Ablagerungen engen den Strömungsquerschnitt der Vakuumschlitze ein, die beim Anwachsen dieser Ablagerungen ihre Aufgabe nicht mehr erfüllen können. Dies bedeutet, daß die Vakuumschlitze regelmäßig gereinigt werden müssen, was aufwendig ist, weil die Vakuumschlitze nur von den Kalibrierflächen her zugänglich sind, so daß die Produktion des Kunststoffprofils unterbrochen und die Kalibriereinrichtung geöffnet werden muß.

### Darstellung der Erfindung

Der Erfindung liegt somit die Aufgabe zugrunde, eine Vorrichtung zum Kalibrieren eines extrudierten Kunststoffprofils der eingangs geschilderten Art konstruktiv so auszugestalten, daß nicht nur in den Vakuumschlitzen in vorteilhafter Weise der erforderliche Unterdruck aufgebaut werden kann, sondern auch eine Reinigung der Vakuumschlitze ohne Unterbrechung der Produktion ermöglicht wird.

Die Erfindung löst die gestellte Aufgabe durch die Merkmale des Anspruchs 1.

Da die Vakuumschlitze den Formkörper quer zur Durchlaufrichtung des Profilstranges durchsetzen, werden die Vakuumschlitze nach dem Lösen der Abdeckung von außen zugänglich, was die Reinigung der Vakuumschlitze ohne ein Zerlegen der Kalibriereinrichtung ermöglicht, und zwar auch während des Durchlaufs eines Profilstranges. Die Vakuumschlitze können den Formkörper quer zur Durchlaufrichtung des Profilstranges und quer zur Längsrichtung ihrer in den Kalibrierflächen liegenden Mündungsöffnung durchsetzen, was einen vorteilhaften Zugang zu den Mündungsöffnungen für Reinigungszwecke eröffnet. Die sich quer zur Längsrichtung ihrer Mündungsöffnungen durch den Formkörper erstreckenden Vakuumschlitze erlauben außerdem deren Anschluß an großzügig dimensionierte Unterdruckkanäle, die in Durchlaufrichtung verlaufen, so daß sich über die gesamte Schlitzlänge ein gleichmäßiger Unterdruck aufbauen läßt. Die den Formkörper quer zur Längsrichtung ihrer Mündungsöffnung durchsetzenden Vakuumschlitze erzwingen allerdings eine aufwendigere Führung der Kühlkanäle, die ja nunmehr zwischen den in Durchlaufrichtung mit Abstand hintereinander angeordneten Vakuumschlitzen vorzusehen sind.

Da im Einlaufbereich der Kalibriereinrichtung der Profilstrang aus der Profildüse möglichst frühzeitig an die Kalibrierflächen angesaugt werden soll, um eine gute Oberflächenqualität des Kunststoffprofils zu erreichen, sind Vakuumschlitze nahe der einlaufseitigen Stirnseite des Formkörpers der Kalibriereinrichtung anzuordnen. In diesem einlaufseitigen Bereich vorgesehene, den Formkörper quer zur Längsrichtung ihrer Mündungsöffnungen durchsetzende Vakuumschlitze unterbinden jedoch eine Kühlung der einlaufseitigen Stirnseite des Formkörpers vom anschließenden, gekühlten Formkörperabschnitt. Da wegen der gedrängten Platzverhältnisse eine gesonderte Kühlung der einlaufseitigen Stirnseite des Formkörpers konstruktiv kaum durchgeführt werden kann, verbieten sich in diesem Bereich den Formkörper quer zur Längsrichtung ihrer Mündungsöffnungen durchsetzende Vakuumschlitze. Um trotzdem eine Reinigung dieser stirnseitigen Vakuumschlitze zu ermöglichen, können die Vakuumschlitze den Formkörper in Längsrichtung ihrer Mündungsöffnung durchsetzen. Die in ihrer Längsrichtung den Formkörper durchsetzenden Vakuumschlitze können von außen gereinigt werden, ohne die Kühlung der einlaufseitigen Stirnseite vom anschließenden gekühlten Abschnitt her zu unterbrechen. Mit Vakuumschlitzen, die den Formkörper in ihrer Längsrichtung oder quer dazu durchsetzen, kann somit den jeweiligen Konstruktionsanforderungen vorteilhaft entsprochen werden.

Um einen über die Mündungsöffnung der Vakuumschlitze gleichmäßigen Unterdruck sicherzustellen können die Vakuumschlitze im Anschluß an ihre Mündungsöffnung quer zur Schlitzbreite erweitert sein. Dies gilt insbesondere für Vakuumschlitze, die in Längsrichtung ihrer Mündungsöffnung den Profilstrang durchsetzen. Bei den Formkörper quer zur Längsrichtung ihrer Mündungsöffnung durchsetzenden Vakuumschlitzen wird im Bereich der Erweiterung ein Führungsschulter für ein Reinigungswerkzeug geschaffen, das sich entweder über die Länge der Vakuumschlitze erstreckt oder eine kürzere Länge als der Vakuumschlitz aufweist und entlang der Führungsschulter verschiebbar ist. Die Führungsschulter legt konstruktiv einen vorgegebenen Abstand zur jeweiligen Kalibrierfläche fest, so daß bei einer entsprechenden Dimensionierung des Reinigungswerkzeuges dieses mittels eines Führungsansatzes mit der Führungsschulter zusammenwirkt, ohne die Strangoberfläche zu gefährden.

Die Herstellung der Vakuumschlitze im Formkörper kann einfach gestaltet werden, wenn der Formkörper quer zur Durchlaufrichtung in Längsabschnitte unterteilt ist, die zwischen sich die Vakuumschlitze bilden. In diesem Fall empfiehlt es sich, die Vakuumschlitze durch Vertiefungen in der Stirnfläche des einen zweier aneinanderstoßender Längsabschnitte auszubilden, von denen der jeweils andere die Vertiefung mit seiner anliegenden Stirnfläche abdeckt, so daß nur eine der beiden Stirnseiten eines Längsabschnittes des Formkörpers zur Ausbildung der Vakuumschlitze spanabhebend bearbeitet werden muß. Die Unterteilung des Formkörpers in Längsabschnitte bringt den zusätzlichen Vorteil mit sich, daß die Kalibrierflächen in den einzelnen Längsabschnitten des Formkörpers unterschiedlich gestaltet werden können, um die Kalibriereinrichtung einlaufseitig an die Düse und auslaufseitig an einen nachfolgenden Kalibrator anpassen zu können. Die Kalibrierflächen im einlaufseitigen Längsabschnitt verlaufen in Durchlaufrichtung des Profilstranges geringfügig konisch, um den aus der Profildüse austretenden Profilstrang gleichmäßig über den Umfang an die Kalibrierflächen der Kalibriereinrichtung anzulegen. Eine konische Erweiterung der Kalibrierflächen des auslaufseitigen Längsabschnittes kann helfen, Fluchtungs- und Winkelfehler eines nachfolgenden Kalibrators auszugleichen.

Wie bereits ausgeführt wurde, sind aufgrund von den Formkörper quer zur Längsrichtung ihrer Mündungsöffnung durchsetzenden Vakuumschlitzen keine in Durchlaufrichtung durchgehenden Kühlkanäle möglich. Um trotzdem eine gute Wärmeabfuhr über die Kalibrierflächen sicherzustellen, können die Längsabschnitte im Bereich der Kalibrierflächen zur Bildung von Kühlkanälen in Durchlaufrichtung verlaufende, beidseitig verschlossene Durchgangsbohrungen aufweisen, die über Anschlußbohrungen mit außerhalb der Bereiche der Vakuumschlitze die Längsabschnitte in Durchlaufrichtung durchsetzenden, gemeinsamen Zu- und Ablaufbohrungen verbunden sind. Durch diese Maßnahme können die Kühlkanäle mit ihren Anschlüssen ohne weiteres in den Längsabschnitten gebohrt und über die gemeinsamen Zu- und Ablaufbohrungen mit dem Kühlmittel beaufschlagt werden.

Die Abdeckung der Vakuumschlitze auf der Außenseite des Formkörpers kann konstruktiv unterschiedlich gestaltet werden, weil es ja lediglich darum geht, die Vakuumschlitze luftdicht zu verschließen. Besonders einfache Konstruktionsverhältnisse ergeben sich jedoch, wenn die Abdeckung der Vakuumschlitze auf der Außenseite des Formkörpers aus einer biegeweichen Folie besteht, die über den im Bereich der Vakuumschlitze herrschenden Unterdruck dichtend an die Außenseite des Formkörpers angesaugt wird. Damit beim Einsatz einer solchen Folie nicht alle Vakuumschlitze auf einer Umfangsseite des Formkörpers gleichzeitig geöffnet werden müssen, kann eine sich über mehrere Vakuumschlitze auf einer Umfangsseite des Formkörpers erstreckende Folie als Abdeckung eingesetzt werden, die von einem Rand ausgehende und sich zwischen die Vakuumschlitze erstreckende Einschnitte aufweist, so daß die sich durch die Einschnitte ergebenden Zungen der Folie jeweils für sich vom zugehörigen Vakuumschlitz abgehoben werden können, was die Reinigung der einzelnen Vakuumschlitze nacheinander ermöglicht.

Um die Halterung der Folie auf der Außenseite des Formkörpers auch nach dem Abschalten der Unterdruckquelle zu gewährleisten, kann die Folie der Abdeckung zumindest bereichsweise magnetisch sein. An diese Halterung werden keine besonderen Ansprüche gestellt, weil das dichtende Anpressen der Folie an die Ränder der Vakuumschlitze nicht durch die Magnetkräfte, sondern durch den Unterdruck in den Vakuumschlitzen erreicht wird.

### Kurze Beschreibung der Zeichnungen

In der Zeichnungen ist der Erfindungsgegenstand beispielsweise dargestellt. Es zeigen:
- Fig. 1: eine erfindungsgemäße Kalibriereinrichtung in einem vereinfachten Schaubild,
- Fig. 2: diese Kalibriereinrichtung in einer Ansicht auf die einlaufseitige Stirnseite,
- Fig. 3: die Kalibriereinrichtung in einer Seitenansicht,
- Fig. 4: einen Schnitt nach der Linie IV-IV der Fig. 3 in einem größeren Maßstab,
- Fig. 5: eine Stirnansicht eines Längsabschnittes des Formkörpers mit den Vertiefungen für die Vakuumschlitze,
- Fig. 6: einen Schnitt nach der Linie VI-VI der Fig. 5 in einem größeren Maßstab,
- Fig. 7: eine der Fig. 5 entsprechende Darstellung einer Konstruktionsvariante des stirnseitigen Längsabschnittes des Formkörpers und
- Fig. 8: einen Schnitt nach der Linie VIII-VIII der Fig. 7 in einem größeren Maßstab.

### Weg zur Ausführung der Erfindung

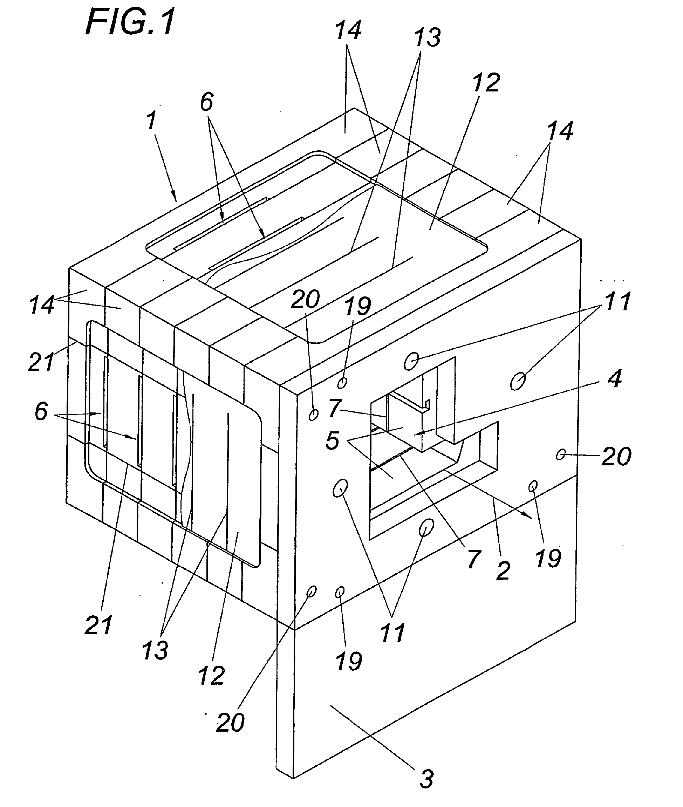

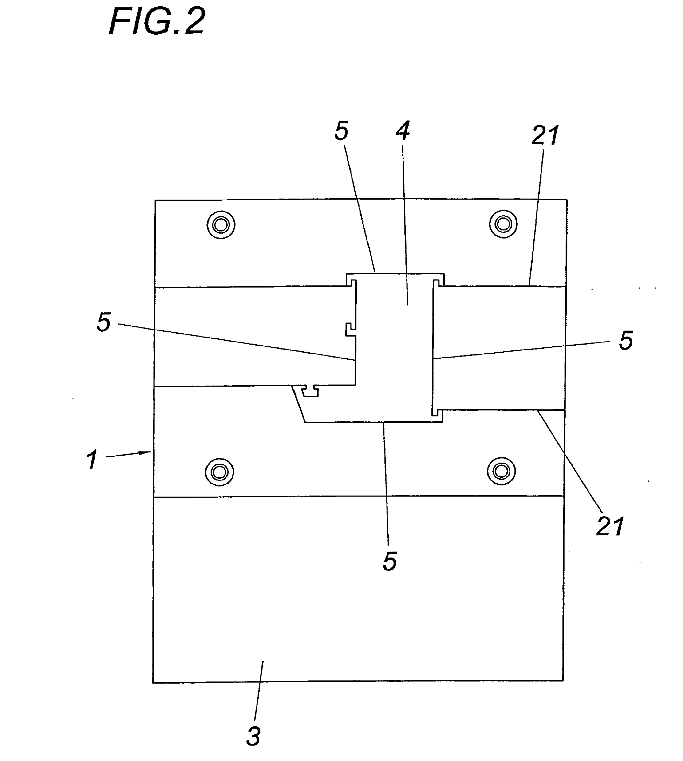

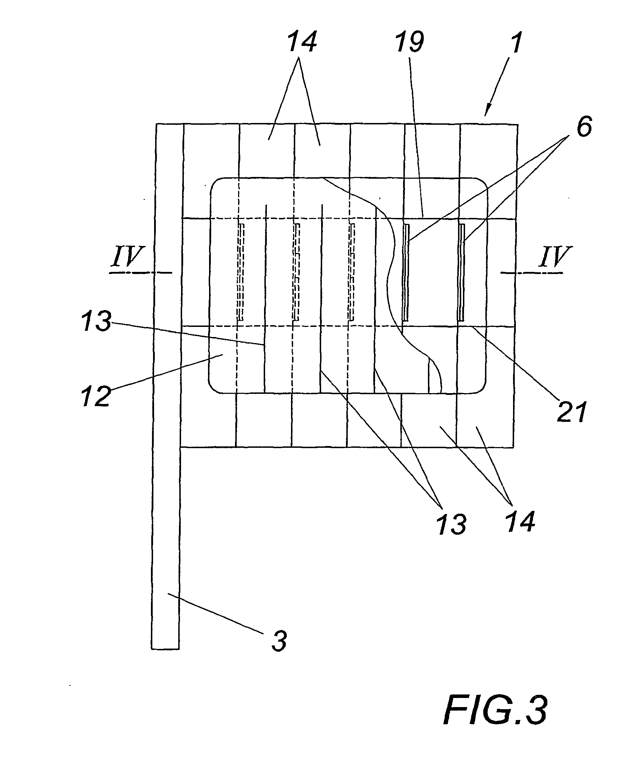

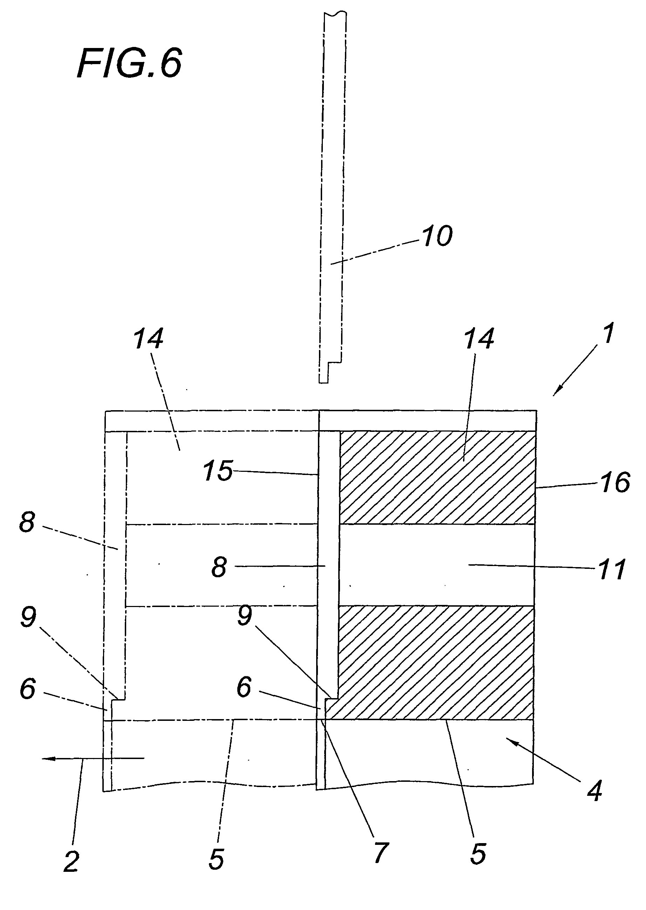

Die Kalibriereinrichtung weist einen Formkörper 1 auf, der einer formgebenden Profildüse eines Extrudierwerkzeuges unmittelbar nachgeordnet ist und bezüglich der Durchlaufrichtung 2 des aus der Profildüse austretenden Profilstranges auslaufseitig an einer Halterungsplatte 3 befestigt ist. Die Durchtrittsöffnung 4 für den Profilstrang wird durch Kalibrierflächen 5 begrenzt, an die der Profilstrang angesaugt wird. Zu diesem Zweck sind in den Kalibrierflächen 5 quer zur Durchlaufrichtung 2 verlaufende Vakuumschlitze 6 vorgesehen, die mit gegenseitigem Abstand in Durchlaufrichtung 2 angeordnet sind. Zum Unterschied von herkömmlichen Kalibriereinrichtungen durchsetzen die Vakuumschlitze 6 jedoch den Formkörper 1 quer zur Durchlaufrichtung 2, und zwar gemäß den Fig. 1 bis 6 quer zur Längsrichtung ihrer in den Kalibrierflächen 5 liegenden Mündungsöffnungen 7. Die Vakuumschlitze 6 weisen im Anschluß an ihre Mündungsöffnungen 7 eine Erweiterung 8 quer zur Schlitzbreite auf, wie dies insbesondere der Fig. 6 entnommen werden kann. Durch die Erweiterung 8 werden nicht nur die Strömungsverhältnisse zum Ansaugen des Profilstranges an die Kalibrierflächen 5 verbessert und die Gefahren bezüglich eines Verschließens der Vakuumschlitze durch Ablagerungen verringert, sondern auch eine Führungsschulter 9 erreicht, die in einem vorgegebenen Abstand von der zugehörigen Kalibrierfläche 5 verläuft und als Abstützung für ein Reinigungswerkzeug 10 dienen kann, das von außen durch den jeweiligen Vakuumschlitz 6 in diesen bis zum Anschlag an der Führungsschulter 9 eingeführt wird, um Ablagerungen im Bereich der Mündungsöffnung 7 abzuscheren und gegen den Profilstrang zu drücken, mit dem die abgescherten Ablagerungen aus der Kalibriereinrichtung ausgetragen werden. Die Kalibriereinrichtung ist daher im Bereich der Vakuumschlitze 6 freizustellen, um das Reinigungswerkzeug 10 von außen in die Vakuumschlitze einführen zu können. Zu diesem Zweck kann der Formkörper 1 durch die Halterungsplatte 3 mit Abstand oberhalb eines Kalibriertisches gehalten werden. Das Reinigungswerkzeug 10 selbst kann einen dem Querschnitt der Mündungsöffnung 7 entsprechenden Querschnitt aufweisen und sich daher über die gesamte Länge des Vakuumschlitzes 6 erstrecken oder entlang der Führungsschulter 9 über die Schlitzlänge bewegt werden.

Die Vakuumschlitze 6 sind über großzügig dimensionierte Vakuumkanäle 11 an eine Unterdruckquelle angeschlossen, und zwar über die Halterungsplatte 3. Um innerhalb der Vakuumschlitze 6 einen entsprechenden Unterdruck zum Ansaugen des Profilstranges an die Kalibrierflächen 5 aufzubauen, müssen die Vakuumschlitze 6 an der Außenseite des Formkörpers 1 verschlossen werden. Zu diesem Zweck ist eine lösbare Abdeckung 12 vorgesehen, die vorzugsweise aus einer biegeweichen Folie besteht und über den in den Vakuumschlitzen 6 aufgebauten Unterdruck dichtend an den Formkörper 1 angesaugt wird. Um die Vakuumschlitze einzeln öffnen zu können, ist die Folie der Abdeckung 12 mit Einschnitten 13 versehen, die von einem Rand ausgehen und sich zwischen die Vakuumschlitze 6 erstrecken, so daß die durch die Einschnitte 13 gebildeten, jeweils einen Vakuumschlitz abdeckenden Zungen je für sich vom Formkörper 1 abgehoben werden können.

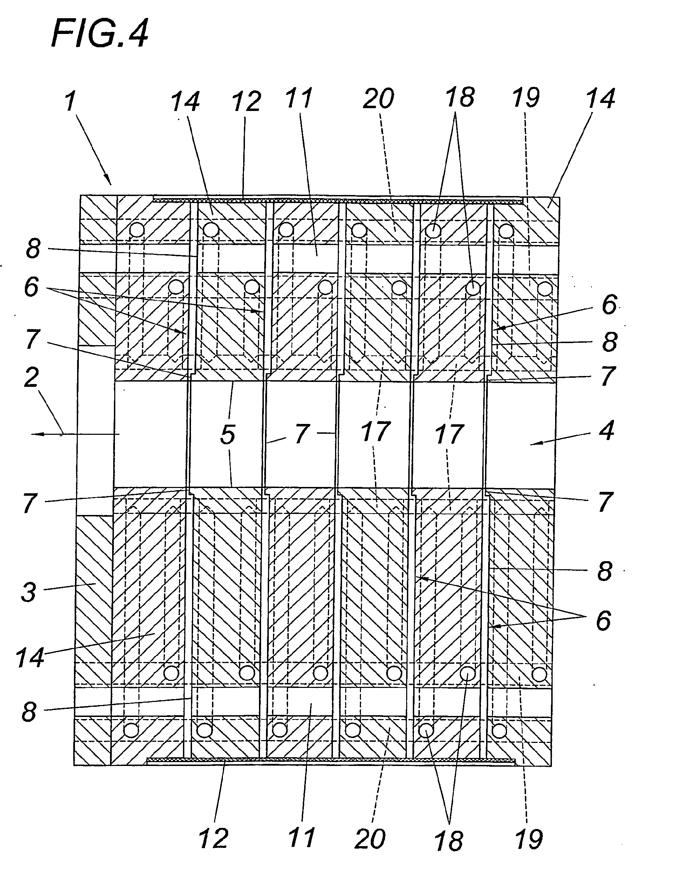

Zur einfachen Herstellung der Vakuumschlitze 6 ist der Formkörper 1 quer zur Durchlaufrichtung 2 in Längsabschnitte 14 unterteilt, zwischen denen die Vakuumschlitze 6 vorgesehen sind. Die Anordnung ist dabei so getroffen, daß die plattenförmigen Längsabschnitte 14 auf der einen Stirnseite 15, vorzugsweise auf der auslaufseitigen, die Vakuumschlitze 6 bildende Vertiefungen aufweisen, auf der gegenüberliegenden, vorzugsweise einlaufseitigen Stirnseite 16 jedoch ebenflächig ausgebildet sind, so daß beim axialen Zusammenspannen der plattenförmigen Längsabschnitte 14 die Vakuumschlitze 6 erhalten werden. Mit Ausnahme des einlaufseitigen Längsabschnittes 14 weisen die Längsabschnitte 14 parallel zur Durchlaufrichtung 2 verlaufende Durchgangsbohrungen zur Bildung der Unterdruckkanäle 11 auf, wie dies insbesondere die Fig. 4 zeigt.

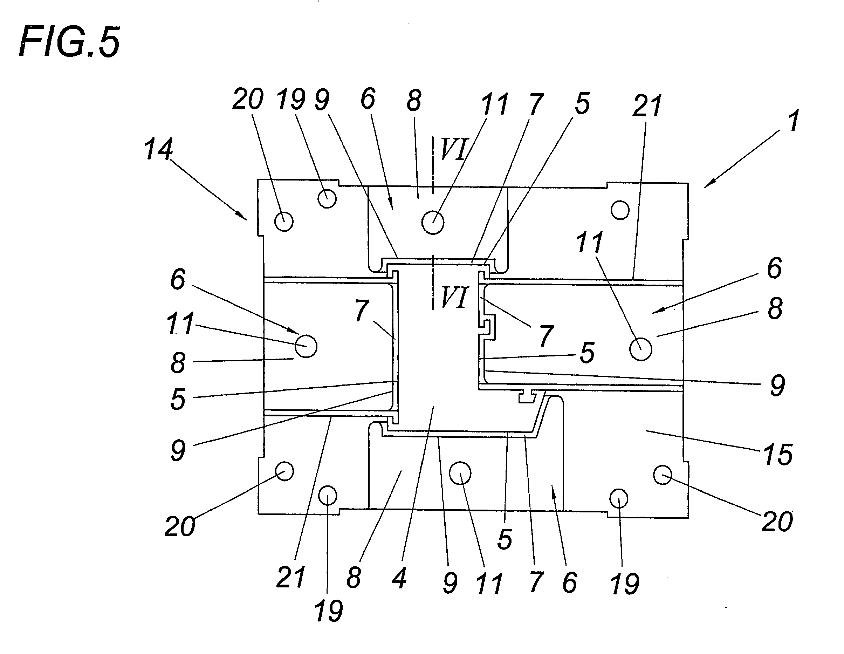

Die quer zur Durchlaufrichtung 2 verlaufenden Vakuumschlitze 6, die den Formkörper 1 quer zur Längsrichtung ihrer Mündungsöffnungen 7 durchsetzen, verhindern die übliche in Durchlaufrichtung 2 durchgehende Führung der vorzusehenden Kühlkanäle 17, deren Anordnung somit auf die einzelnen Längsabschnitte 14 beschränkt werden muß. Über Anschlußbohrungen 18 sind die Kühlkanäle 17 gemäß der Fig. 4 mit Zu- bzw. Ablaufbohrungen 19, 20 für das Kühlmittel verbunden, die die Längsabschnitte 14 außerhalb der Bereiche der Vakuumschlitze 6 in Durchlaufrichtung 2 durchsetzen, wie dies der Fig. 5 entnommen werden kann. Die Anspeisung dieser für die Kühlkanäle 17 der einzelnen Längsabschnitte 14 gemeinsamen Zu- und Ablaufbohrungen 19, 20 erfolgt vorzugsweise über die Halterungsplatte 3.

Der Formkörper 1 ist nicht nur in Längsabschnitte 14 unterteilt, sondern auch quer dazu durch Trennflächen 21, die in Durchlaufrichtung 2 verlaufen, um den durch die Kalibrierflächen 5 bestimmten Profilquerschnitt in herkömmlicher Weise aus einzelnen Formleisten entlang der Trennflächen 21 zusammensetzen zu können.

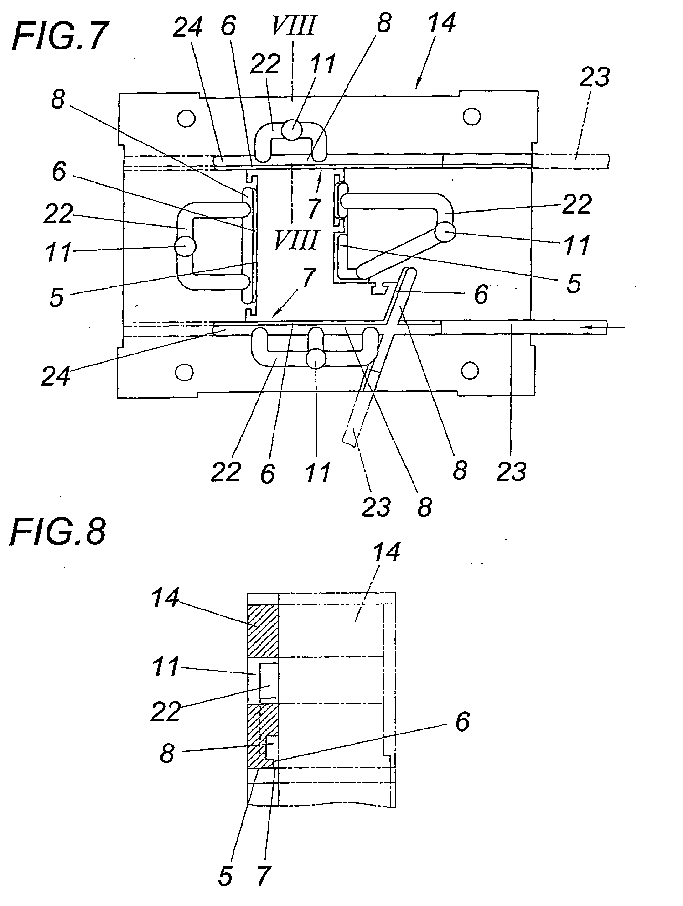

In den Fig. 7 und Fig. 8 ist eine Ausführungsvariante des stirnseitigen Längsabschnittes 14 auf der Einlaufseite des Formkörpers 1 dargestellt. Zum Unterschied zur Ausführungsform nach den Fig. 1 bis 6 durchsetzen die Vakuumschlitze 6 jedoch den Formkörper 1 nicht quer zur Längsrichtung, sondern in Längsrichtung ihrer Mündungsöffnungen 7. Dies bedeutet, daß die Vakuumschlitze 6, die wiederum im Anschluß an ihre Mündungsöffnung 7 eine Erweiterung 8 quer zur Schlitzbreite aufweisen, zumindest auf einer Seite bis zur äußeren Oberfläche des Formkörpers 1 durchgehen und im Oberflächenbereich durch eine lösbare Abdeckung verschlossen werden, um im Bereich der Vakuumschlitze 6 einen entsprechenden Unterdruck aufbauen zu können. Die Vakuumschlitze 6 sind ja über die Erweiterungen 8 und Anschlußkanäle 22 mit den Vakuumkanälen 11 verbunden. Zum Reinigen der Vakuumschlitze 6 können bei geöffneter Abdeckung Reinigungswerkzeuge 23 in Längsrichtung der Vakuumschlitze 6 eingeführt werden, wie dies in der Fig. 7 dargestellt ist. Diese Reinigungswerkzeuge 23 weisen einen Querschnitt, auf, der dem Querschnitt der Vakuumschlitze 6 und der anschließenden Erweiterung 8 entspricht, so daß Ablagerungen im Bereich der Vakuumschlitze 6 abgeschert werden und mit dem Profilstrang ausgetragen werden können. Restliche Ablagerungen können außerdem in Verlängerungen 24 der Vakuumschlitze ausgeschoben werden, falls die Vakuumschlitze nicht nach beiden Seiten hin den Formkörper durchsetzen, wie dies in der Fig. 7 strichpunktiert angedeutet ist.

Aufgrund der Verlängerung der Vakuumschlitze 6 mit ihren Erweiterungen 8 bis zur Oberfläche des Formkörpers 1 kann der stirnseitige Längsabschnitt 14 auf der Einlaufseite der Kalibriereinrichtung dünn ausgebildet und vom anschließenden Längsabschnitt her gekühlt werden, der in der Fig. 8 strichpunktiert angedeutet und mit einer eigenen Kühlung versehen ist, wie dies die Fig. 4 zeigt.

## Patentansprüche

1. Vorrichtung zum Kalibrieren eines extrudierten Kunststoffprofils mit einer Kalibriereinrichtung für den aus einer formgebenden Profildüse austretenden Profilstrang, wobei die Kalibriereinrichtung einen den Profilstrang umschließenden Formkörper (1) mit am Profilstrang anliegenden Kalibrierflächen (5) und in den Kalibrierflächen (5) quer zur Durchlaufrichtung (2) des Profilstranges verlaufende, über Unterdruckkanäle (11) an eine Unterdruckquelle anschließbare Vakuumschlitze (6) aufweist, von denen zumindest einzelne Vakuumschlitze (6) den Formkörper (1) quer zur Durchlaufrichtung (2) durchsetzen, **dadurch gekennzeichnet, daß** die den Formkörper (1) durchsetzenden Vakuumschlitze (6) auf der Außenseite des die Unterdruckkanäle (11) aufnehmenden Formkörpers (1) mit einer lösbaren Abdeckung (12) verschlossen sind.

2. Vorrichtung nach Anspruch 1, **dadurch gekennzeichnet, daß** zumindest einzelne Vakuumschlitze (6) den Formkörper (1) quer zur Längsrichtung ihrer in den Kalibrierflächen (5) liegenden Mündungsöffnung (7) durchsetzen.

3. Vorrichtung nach Anspruch 1 oder 2, **dadurch gekennzeichnet, daß** zumindest einzelne Vakuumschlitze (6) den Formkörper (1) in Längsrichtung ihrer in den Kalibrierflächen (5) liegenden Mündungsöffnung (7) durchsetzen.

4. Vorrichtung nach einem der Ansprüche 1 bis 3, **dadurch gekennzeichnet, daß** die Vakuumschlitze (6) im Anschluß an ihre Mündungsöffnung (7) quer zur Schlitzbreite erweitert sind.

5. Vorrichtung nach Anspruch 4, **dadurch gekennzeichnet, daß** die Vakuumschlitze (6) durch die Erweiterung (8) eine Führungsschulter (9) für ein Reinigungswerkzeug (10) bilden.

6. Vorrichtung nach einem der Ansprüche 1 bis 5, **dadurch gekennzeichnet, daß** der Formkörper (1) quer zur Durchlaufrichtung (2) in Längsabschnitte (14) unterteilt ist, die zwischen sich die Vakuumschlitze (6) bilden.

7. Vorrichtung nach Anspruch 6, **dadurch gekennzeichnet, daß** die Vakuumschlitze (6) durch Vertiefungen in der Stirnfläche (15) des einen zweier aneinanderstoßender Längsabschnitte (14) gebildet sind, von denen der jeweils andere die Vertiefungen mit seiner anliegenden, ebenflächigen Stirnfläche (16) abdeckt.

8. Vorrichtung nach Anspruch 6 oder 7, **dadurch gekennzeichnet, daß** zumindest der einlaufseitige und gegebenenfalls auch der auslaufseitige Längsabschnitt (14) einen vom Verlauf der Kalibrierflächen (5) der übrigen Längsabschnitte (14) unterschiedlichen Kalibrierflächenverlauf aufweisen.

9. Vorrichtung nach einem der Ansprüche 6 bis 8, **dadurch gekennzeichnet, daß** die Längsabschnitte (14) im Bereich der Kalibrierflächen (5) zur Bildung von Kühlkanälen (17) in Durchlaufrichtung (2) verlaufende, beidseitig verschlossene Durchgangsbohrungen aufweisen, die über Anschlußbohrungen (18) mit außerhalb der Bereiche der Vakuumschlitze (6) die Längsabschnitte (14) in Durchlaufrichtung (2) durchsetzenden, gemeinsamen Zu- und Ablaufbohrungen (19, 20) verbunden sind.

10. Vorrichtung nach einem der Ansprüche 1 bis 9, **dadurch gekennzeichnet, daß** die Abdeckung (12) der Vakuumschlitze (6) auf der Außenseite des Formkörpers (1) aus einer biegeweichen Folie besteht.

11. Vorrichtung nach Anspruch 10, **dadurch gekennzeichnet, daß** eine sich über mehrere Vakuumschlitze (6) auf einer Umfangsseite des Formkörpers (1) erstrekkende Folie als Abdeckung (12) eingesetzt ist, die von einem Rand ausgehende und sich zwischen die Vakuumschlitze (6) erstreckende Einschnitte (13) aufweist.

12. Vorrichtung nach Anspruch 10 oder 11, **dadurch gekennzeichnet, daß** die Folie der Abdeckung (12) zumindest bereichsweise magnetisch ist.

## Claims

1. Device for calibrating an extruded plastic profile with a calibrating unit for the extruded profile leaving a shaping profiling nozzle, wherein the calibrating unit comprises a moulded body (1) surrounding the extruded profile with calibration surfaces (5) lying against the extruded profile and vacuum slots (6) extending in the calibration surfaces (5) at right angles to the direction of travel (2) of the extruded profile which can be connected via underpressure channels (11) to an underpressure source, of which at least individual vacuum slots (6) pass through the moulded body (1) at right angles to the direction of travel (2), **characterised in that** the vacuum slots (6) passing through the moulded body (1) are closed on the outer side of the moulded body (1) receiving the underpressure channels (11) by a detachable cover (12).

2. Device according to claim 1, **characterised in that** at least individual vacuum slots (6) pass through the moulded body (1) at right angles to the longitudinal direction of their connecting opening (7) lying in the calibration surfaces (5).

3. Device according to claim 1 or 2, **characterised in that** at least individual vacuum slots (6) pass through the moulded body (1) in the longitudinal direction of their connecting opening (7) lying in the calibration surfaces (5).

4. Device according to one of the claims 1 to 3, **characterised in that** the vacuum slots (6) are widened after their connecting opening (7) at right angles to the slot width.

5. Device according to claim 4, **characterised in that** the vacuum slots (6) form, through the widening (8), a guide shoulder (9) for a cleaning tool (10).

6. Device according to one of the claims 1 to 5, **characterised in that** the moulded body (1) is divided at right angles to the direction of travel (2) into longitudinal sections (14) which form the vacuum slots (6) between them.

7. Device according to claim 6, **characterised in that** the vacuum slots (6) are formed by depressions in the end face (15) of one of two abutting longitudinal sections (12), of which the other longitudinal section in each case covers the depressions with its abutting planar end face (16).

8. Device according to claim 6 or 7, **characterised in that** at least the inlet-side and possibly also the outlet-side longitudinal section (14) comprise/s a calibration surface course differing from the course of the calibration surfaces (5) of the remaining longitudinal sections (14).

9. Device according to one of the claims 6 to 8, **characterised in that** the longitudinal sections (14) comprise, in the region of the calibration surfaces (5), passage bores closed on both sides extending in the direction of travel (2) for the formation of cooling channels (17) which are connected via connecting bores (18) to common supply and removal bores (19, 20) passing outside of the regions of the vacuum slots (6) through the longitudinal sections (14) in the direction of travel (2).

10. Device according to one of the claims 1 to 9, **characterised in that** the cover (12) of the vacuum slots (6) consists of a flexible film on the outer side of the moulded body (1).

11. Device according to claim 10, **characterised in that** a film extending on a peripheral side of the moulded body (1) via a plurality of vacuum slots (6) is used as a cover (12) which comprises indentations (13) extending from an edge and between the vacuum slots (6).

12. Device according to claim 10 or 11, **characterised in that** the film of the cover (12) is magnetic at least in areas.

## Revendications

1. Dispositif pour calibrer un profilé en matière synthétique extrudé, avec un dispositif de calibrage pour le tronçon de profilé sortant de la buse de profilage conformatrice, le dispositif de calibrage présentant un corps de forme (1) entourant le tronçon de profilé, avec des faces de calibrage (5) s'appliquant sur le tronçon de profilé et des fentes à vide (6), pouvant être raccordées à une source de vide par des canaux à vide (11), s'étendant dans les faces de calibrage (5) transversalement par rapport à la direction de défilement (2) du tronçon de profilé, fentes à vide dont au moins certaines fentes à vide (6) traversent le corps de forme (1) transversalement par rapport à la direction de passage (2), **caractérisé en ce que** les fentes à vide (6) traversant le corps de forme (1) sont fermées sur la face extérieure du corps de forme (1) recevant les canaux à vide (11) au moyen d'un couvercle (12) amovible.

2. Dispositif selon la revendication 1, **caractérisé en ce qu'**au moins certaines fentes à vide (6) traversent le corps de forme (1) transversalement à la direction longitudinale de leur ouverture d'embouchure (7) située dans les faces de calibrage (5).

3. Dispositif selon la revendication 1 ou 2, **caractérisé en ce qu'**au moins certaines fentes à vide (6) traversent le corps de forme (1) dans la direction longitudinale de leur ouverture d'embouchure (7) située dans les faces de calibrage (5).

4. Dispositif selon l'une des revendications 1 à 3, **caractérisé en ce que** les fentes à vide (6) sont élargies transversalement par rapport à la largeur de fente, en raccordement à leur ouverture d'embouchure (7).

5. Dispositif selon la revendication 4, **caractérisé en ce que** les fentes à vide (6) passant par l'élargissement (8) forment un épaulement de guidage (9) pour un outil de nettoyage (10).

6. Dispositif selon l'une des revendications 1 à 5, **caractérisé en ce que** le corps de forme (1) est subdivisé transversalement par rapport à la direction de défilement (2), en des tronçons de longueur (14) qui forment entre eux les fentes à vide (6).

7. Dispositif selon la revendication 6, **caractérisé en ce que** les fentes à vide (6) sont formées par des cavités ménagées dans la face frontale (15) d'un de deux tronçons longitudinaux (14) se jointoyant, dont chaque fois l'autre couvre les cavités par sa face frontale (16) à surface plane, placée en appui.

8. Dispositif selon la revendication 6 ou 7, **caractérisé en ce qu'**au moins le tronçon de longueur (14) situé côté entrée et, le cas échéant, également celui situé côté sortie, présentent une allure de surface de calibrage différente de l'allure des surfaces de calibrage (5) des autres tronçons de longueur (14).

9. Dispositif selon l'une des revendications 6 à 8, **caractérisé en ce que** les tronçons de longueur (14) présentent, dans la zone des surfaces de calibrage (5), pour former des canaux de refroidissement (17), des perçages traversants fermés de part et d'autre, s'étendant dans la direction de passage (2), et qui sont reliés, par des perçages de raccordement (18), à des perçages d'alimentation et d'évacuation (19, 20) communs, traversant les tronçons de longueur (14) dans la direction de défilement (2), à l'extérieur des zones des fentes à vide (6).

10. Dispositif selon l'une des revendications 1 à 9, **caractérisé en ce que** le couvercle (12) des fentes à vide (6), sur la face extérieure du corps de forme (1), est composé d'une feuille présentant une souplesse en flexion.

11. Dispositif selon la revendication 10, **caractérisé en ce qu'**une feuille, s'étendant sur plusieurs fentes à vide (6), sur une face périphérique du corps de forme (1), est utilisée comme couvercle (12), présentant des entailles (13) partant d'un bord et s'étendant entre les fentes à vide (6).

12. Dispositif selon la revendication 10 ou 11, **caractérisé en ce que** la feuille du couvercle (12) est magnétique au moins par zones.
